# EUROPÄISCHE PATENTSCHRIFT

(11) **EP 3 642 116 B1**
(45) Veröffentlichungstag und Bekanntmachung des Hinweises auf die Patenterteilung: **19.05.2021**
(21) Anmeldenummer: 18729649.6
(22) Anmeldetag: 05.06.2018
(51) Int. Cl.: B65B 5/06, B65B 23/08, B65B 35/58, B65G 47/91, B65G 47/244, B25J 15/00, B25J 15/06, B65B 5/08, B65B 35/18

(54) **UMSETZVORRICHTUNG ZUR UMSETZUNG VON EIERN UND VORRICHTUNG ZUM TRANSPORT UND VERPACKEN VON EIERN**
TRANSFER DEVICE FOR TRANSFERRING EGGS AND DEVICE FOR TRANSPORTING AND PACKAGING EGGS
DISPOSITIF DE TRANSFERT POUR TRANSFÉRER DES OEUFS ET DISPOSITIF POUR TRANSPORTER ET EMBALLER DES OEUFS

(30) Priorität: 19.06.2017 DE 102017113410
(43) Veröffentlichungstag der Anmeldung: 29.04.2020
(73) Patentinhaber: Bergmeier, Gerd, 32120 Hiddenhausen (DE)
(72) Erfinder: Bergmeier, Gerd, 32120 Hiddenhausen (DE)
(74) Vertreter: Dantz, Jan Henning
(86) Internationale Anmeldenummer: PCT/EP2018/064748
(87) Internationale Veröffentlichungsnummer: WO 2018/234031

(56) Entgegenhaltungen:
- EP-A1- 0 768 254
- ES-A1- 2 351 466
- JP-A- 2000 247 306
- US-A- 3 230 001
- US-A- 5 743 068

## Beschreibung

Die vorliegende Erfindung betrifft eine Umsetzvorrichtung zur Umsetzung von Eiern gemäß dem Oberbegriff des Anspruchs 1 sowie eine Vorrichtung zum Transport und Verpacken von Eiern gemäß dem Oberbegriff des Anspruchs 7.

Derartige Umsetzvorrichtungen werden benötigt, um Eier von einem Förderband in einer Eierverpackung umzusetzen. Zum schonenden und zuverlässigen Anheben von Eiern ist es bekannt, die Eier über sogenannte Saughebeelemente, die an eine Saugeinrichtung wie beispielsweise eine Vakuumpumpe angeschlossen sind, in einer Anordnung von beispielsweise sechs Saughebeelementen an einer Montageplatte anzubringen. Die Montageplatte ist von einer Position, bei der die Saughebeelemente über dem Förderband positioniert sind, in eine Position verschwenkbar, bei der die Montageplatte über der Eierverpackung positioniert ist, so dass durch Aufhebung des Unterdrucks in den Saugelementen die Eier in die Eierverpackung umgesetzt werden können. Die so befüllte Eierverpackung wird anschließend verschlossen und sodann einem Sammelband zur weiteren Verpackung zugeführt.

Problematisch an den bekannten Umsetzvorrichtungen in solchen Transport- und Verpackungsvorrichtungen für Eier ist, dass für unterschiedliche Eierverpackungen jeweils unterschiedliche Umsetzvorrichtungen eingesetzt werden müssen.

Aus den Druckschriften JP 2000 247306 A, US 3 230 001 A, ES 2 351 466 A1, EP 0 768 254 A1 und US 5 743 068 A sind Umsetzvorrichtungen bekannt, bei denen die Saughebeelementen so an einer Montageplatte angebracht sind, dass diese in der Ebene der Montageplatte relativ zu dieser um ein begrenztes Maß verschoben werden können.

Aufgabe der vorliegenden Erfindung ist es, eine Umsetzvorrichtung zur Umsetzung von Eiern und eine Vorrichtung zum Transport und Verpacken von Eiern bereitzustellen, mit der ohne Austausch der Umsetzvorrichtung eine Vielzahl von Eierverpackungen befüllt werden können.

Diese Aufgabe wird durch eine Umsetzvorrichtung zur Umsetzung von Eiern mit den Merkmalen des Anspruchs 1 sowie durch eine Vorrichtung mit den Merkmalen des Anspruchs 6 gelöst.

Die erfindungsgemäße Umsetzvorrichtung zur Umsetzung von Eiern von einem Förderband in eine Eierverpackung weist ein Gestell mit wenigstens einer Montageplatte eines Montageelements auf, an der mehrere an eine Saugeinrichtung anschließbare Saughebeelemente montiert sind. Die Saughebeelemente sind dabei in der Ebene der Montageplatte motorisch oder hydraulisch verschiebbar zwischen einer Ansaugstellung und einer Abgabestellung an der Montageplatte montiert.

Dabei ist wenigstens eines der Montageelemente um eine senkrecht zu den Montageelementen ausgerichteten Drehachse verschwenkbar

Dadurch ist ermöglicht, die an einer solchen Montageplatte montierte Gruppe von Saughebeelementen in unterschiedlichen Positionen relativ zueinander zu positionieren, so dass dadurch beispielsweise sowohl doppelreihige Eierverpackungen als auch sogenannte Sternverpackungen für Eier bestückbar sind. Durch das wenigstens eine um eine senkrecht zu den Montageelementen ausgerichteten Drehachse verschwenkbare Montageelement sind weitere Be- oder Entladeanordnungen der Saughebeelemente ermöglicht.

Vorteilhafte Ausführungsvarianten der Erfindung sind Gegenstand der Unteransprüche.

Gemäß einer vorteilhaften Ausführungsvariante sind an der Montageplatte sechs Saughebeelemente montiert, wobei zwei der Saughebeelemente linear in einer ersten Verschieberichtung und die vier anderen der Saughebeelemente in einer zweiten Verschieberichtung bewegbar sind.

Dies ermöglicht bereits in einfacher Weise eine Verschiebung der Saughebeelemente von einer Anordnung der Saughebeelemente in zwei Reihen in eine sternförmige Anordnung der Saughebeelemente.

Gemäß einer weiteren vorteilhaften Ausführungsvariante weist die Montageplatte Führungsausnehmungen zur Aufnahme von Führungsteilen der Saughebeelemente auf, in denen die Führungsteile verschiebbar geführt sind.

Dies gewährleistet eine exakte Führung der Saughebeelemente bei der Verschiebung derselben.

Jedes der Saughebeelemente weist gemäß einer vorteilhaften Ausführungsvariante einen Saugnapf, ein in ein oberes Ende des Saugnapfes mündendes Schlauch- oder Rohrstück und ein mit einer Verstellmechanik verbundenes Führungsteil auf.

Dadurch ist ermöglicht, jedes der Saughebeelemente zwischen zwei oder mehr unterschiedlichen Positionen zu verschieben.

Erfindungsgemäß sind an dem Gestell zwei Montageelemente nebeneinander montiert.

Dies ermöglicht eine weitere Beschleunigung des Umsetzvorgangs, bei dem entsprechend zwei Eierpackungen gleichzeitig bestückt werden können oder alternativ eine Eierverpackung mit einer größeren Anzahl von Eieraufnahmestellen bestückbar ist.

Die Vorrichtung zum Transport und Verpacken von Eiern in Eierverpackungen weist wenigstens eine Entstapelungsstation für leere Eierverpackungen auf, eine Eierausrichtungsstation, eine Umsetzstation zur Umsetzung der Eier von einem Förderband mit mehreren nebeneinander angeordneten Eiaufnahmen in eine Eierverpackung, eine Verpackungsschließstation und eine Ausgabestation. Dabei ist die Umsetzstation gemäß der oben beschriebenen Umsetzvorrichtung ausgebildet.

Nachfolgend wird eine bevorzugte Ausführungsvariante der Erfindung anhand der beiliegenden Zeichnungen näher erläutert. Es zeigen:
- Fig. 1: eine perspektivische Darstellung einer Ausführungsvariante einer erfindungsgemäßen Vorrichtung zum Transport und Verpacken von Eiern,
- Fig. 2: eine Detailansicht einer Eierausrichtungsstation,
- Fig. 3 und 4: in Fig. 2 mit III, IV bezeichnetes Detail der Eierausrichtungsstation in unterschiedlichen Ausrichtungsstellungen,
- Fig. 5: eine perspektivische Detailansicht einer Ausführungsvariante einer Umsetzvorrichtung,
- Fig. 6: eine Ansicht von unten auf die Umsetzvorrichtung gemäß Fig. 5,
- Fig. 7: eine perspektivische Detaildarstellung der Umsetzvorrichtung aus Fig. 5 in einer Sternanordnung der Saughebeelemente,
- Fig. 8: eine Ansicht von unten auf die Umsetzvorrichtung gem. Fig. 7,
- Fig. 9: eine perspektivische Detailansicht einer Verpackungsschließ-station,
- Fig. 10: ein in Fig. 9 mit X bezeichneter Detailausschnitt der Verpackungsschließstation mit angehobener Führungsleiste dund

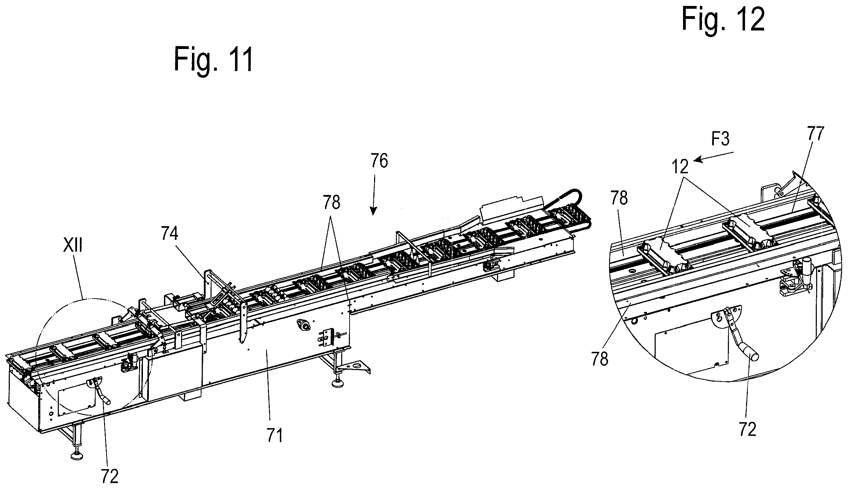

- Fig. 11 und 12: den Fig. 9 und 10 entsprechende Ansichten der Verpackungsschließstation mit abgesenkter Führungsleiste.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Umsetzvorrichtung, des Förderbandes, der Eierverpackung, der Eierausrichtungsstation, der Entstapelungsstation, der Verpackungsschließstation, der Saughebeelemente und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

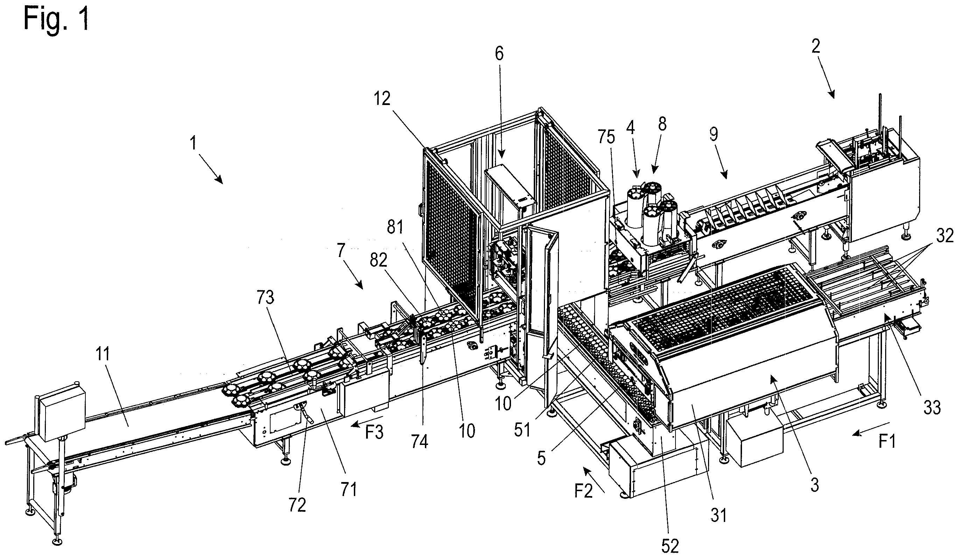

In Fig. 1 ist mit dem Bezugszeichen 1 insgesamt eine Ausführungsvariante einer erfindungsgemäßen Vorrichtung zum Transport und Verpacken von Eiern 10 in Eierverpackungen 8 bezeichnet.

Die Vorrichtung 1 weist eine Zuführstation für Eierverpackungen 8 auf, die hier in Gestalt zweier Entstapelungsstationen 2, 4 ausgebildet ist, die mit voneinander verschiedenen Eierverpackungen befüllbar sind.

So dient die Entstapelungsstation 2 zur Entstapelung von übereinander gestapelten zweireihigen, insbesondere 6er, 10er oder 12er-Eierverpackungen.

Die doppelreihigen Eierverpackungen werden dabei über ein Fächerband 9 auf ein zu einer Verpackungsschließstation 7 führendes Förderband 75 geleitet. Die Entpackungsstation 4 ist bei der hier gezeigten Ausführungsvariante so positioniert, dass die Eierverpackungen 8 direkt auf das Förderband 75 abgelegt werden.

Die zweite Entstapelungsvorrichtung 4 dient dabei zur Entstapelung von aufeinander gestapelten Sternverpackungen für Eier, wobei jede dieser Verpackungen 8 vorzugsweise zur Aufnahme von sechs Eiern 10 ausgebildet ist.

Parallel zu dem Strang der Eierverpackungszuführung ist eine Zuführstation für die zu verpackenden Eier 10 angeordnet. Die Eier 10 werden dazu auf eine Förderstrecke 33 mit mehreren parallel zueinander verlaufenden Laufbahnen 32 einer Eierausrichtungsstation 3 in einer Förderrichtung F₁ geführt.

Von dieser Eierausrichtungsstation 3 werden die Eier 10 wahlweise mit dem Eiboden 101 oder der Eispitze 102 in Eieraufnahmen 51 eines ersten Förderbandes 5 eingesetzt.

Dieses erste Förderband 5 dient zur Beförderung der Eier von der Eierausrichtungsstation 3 in einer Förderrichtung F₂ zu einer Umsetzvorrichtung 6, die der Umsetzung der Eier 10 von dem Förderband 5 in die Eierverpackungen 8 dient.

Die mit Eiern 10 befüllten Eierverpackungen 8 werden anschließend durch eine Verpackungsschließstation 7 weiter befördert, in der die Eierverpackungen 8 aus einer geöffneten Beladestellung, bei der ein Verpackungsdeckel 82 in Förderrichtung F₃ aufgeklappt vor einem Verpackungsboden 81 der Eierverpackungen 8 auf dem Transportband 75 positioniert ist, durch Umklappen des Verpackungsdeckels 82 auf den jeweiligen Verpackungsboden 81 verschlossen wird.

Im Anschluss daran wird die so mit Eiern 10 befüllte Eierverpackung 8 weiter zu einer Ausgabestation 11 befördert.

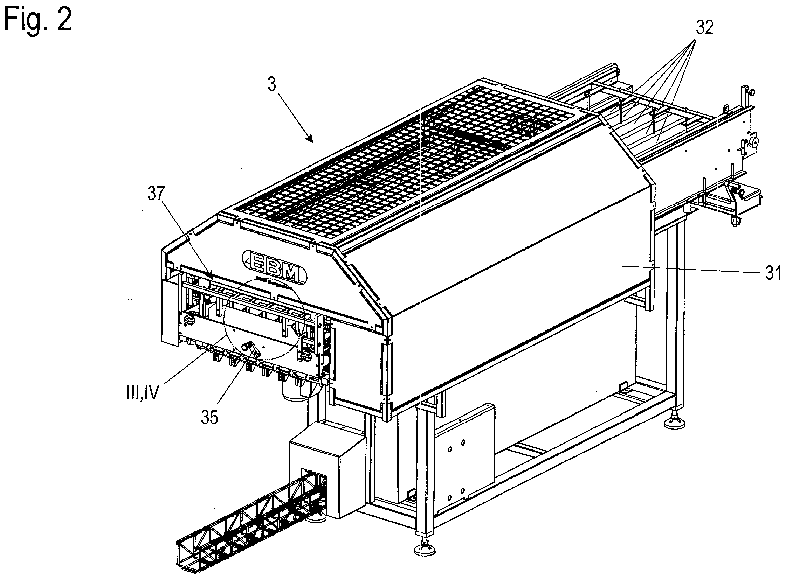

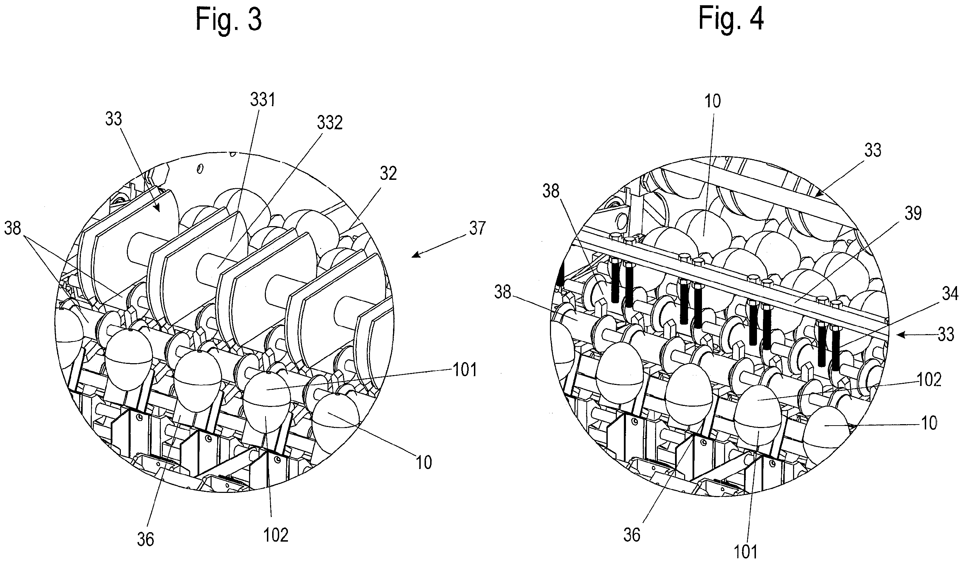

Details der Eierausrichtungsstation 3 sind in den Figuren 2 bis 4 dargestellt.

Wie in den Figuren 2 bis 4 gezeigt ist, werden die Eier 10 nach dem Auflegen auf die Laufbahnen 32 auf der Seite liegend rollend in Richtung eines Übergabebereichs 37 geführt.

In diesem Übergabebereich 37 ist eine Verstelleinrichtung 33 angeordnet, mit der die Eier 10 wahlweise mit dem Eiboden 101 oder der Eispitze 102 in jeweilige Eiaufnahmen 51 des ersten Förderbandes 5 einsetzbar sind.

Die Verstelleinrichtung 33 weist eine sich quer zu den Längsbahnen 32 erstreckende und an einem Gehäuse 31 der Eierausrichtungsstation 3 schwenkbar befestigte Stange 332 auf, an der in Förderrichtung F ausgerichtete Wendeplatten 331 angeordnet sind.

Die Wendeplatten 331 sind dabei so ausgerichtet, dass die an den Stirnkanten dieser Wendeplatten 331 anstoßenden Eier 10 sich bei der Weiterbewegung in Förderrichtung F so drehen, dass die Eispitze 102 in Förderrichtung F nach vorn zeigt.

Der Abstand der einer der Laufbahnen 32 zugeordneten Wendeplatten 331 zueinander ist dabei so bemessen, dass zwischen zwei benachbarten Wendeplatten 331 ein Kanal gebildet wird, der kleiner ist als die Längserstreckung der Eier 10, aber größer als die Dicke der Eier 10.

Die Eier 10 werden dabei auf Förderrollen 38 in Förderrichtung F weiterbefördert, bis sie über eine Rutsche 36 nach unten in die unterhalb des Übergabebereichs 37 angeordneten Eiaufnahmen 51 des ersten Förderbandes 5, in diesem Fall mit der Eispitze 102 nach unten hineinfallen.

Sollen die Eier 10 mit ihrer Eispitze 102 nach oben in die Eiaufnahmen 51 des Förderbandes 5 eingesetzt werden, wird die Verstelleinrichtung 33 umgestellt, und zwar in der Art, dass die Wendeplatten 331 außer Eingriff mit den Eiern 10 genommen werden und stattdessen eine Leiste 39 mit sich in Richtung der Eier 10 erstreckenden Federelementen 34 in die Förderstrecke der Eier 10 angeordnet, insbesondere eingeschwenkt wird. Diese bevorzugt als sich von der Leiste 39 in Richtung der Transportrollen 38 erstreckenden, als Schraubenfedern ausgebildeten Federelementen 34 sind dabei in eine Richtung quer zu den Laufbahnen 32 der Eierausrichtungsstation 3 derart positioniert, dass die Eier 10 beim Weitertransport über die Laufrollen 38 so angestoßen werden, dass sie sich mit dem Eiboden 101 nach vorn in Förderrichtung ausrichten und dadurch mit dem Eiboden 101 nach unten über die Rutsche 36 in die Eiaufnahmen 51 des Förderbands 5 fallen.

Die Betätigung der Verstelleinrichtung erfolgt dabei vorzugsweise über einen Betätigungshebel 35. Der Betätigungshebel ist dabei derart mit der Leiste 39 und der Stange 332 gekoppelt, dass durch Betätigen, insbesondere Verschwenken des relativ zum Gehäuse 31 der Eierausrichtungsstation 3 bewegbaren Betätigungshebels 35 die Stange 332 mit den Wendeplatten 331 in den Förderbereich der Eier 10 eingeschwenkt und die Leiste 39 gleichzeitig aus dem Förderbereich der Eier 10 heraus geschwenkt wird bzw. bei Betätigung des Betätigungshebel 35 in entgegengesetzter Richtung die Stange 332 mit den Wendeplatten 331 aus dem Förderbereich der Eier 10 heraus geschwenkt und die Leiste 39 gleichzeitig in den Förderbereich der Eier 10 eingeschwenkt wird.

Denkbar ist auch eine elektromotorisch angesteuerte Verstellung.

Das erste Förderband 5 weist, wie in Fig. 1 gezeigt, mehrere parallel angeordnete Reihen von Eiaufnahmen 51 auf. Die Förderrichtung F₂ der Eier 10 auf dem Förderband 5 ist dabei bevorzugt senkrecht zur Förderrichtung F₁ der Eier 10 entlang der Eierausrichtungsstation 3. Das Förderband 5 befördert die Eier 10 dabei zu der Umsetzvorrichtung 6.

Das Förderband 5 ist dabei bevorzugt derart gelagert, dass es in Förderrichtung F₁ unter dem Übergabebereich 37 der Eierausrichtungsstation 3 verschiebbar ist, um die parallel angeordneten Reihen von Eiaufnahmen 51 befüllen zu können.

Das Förderband 5 besteht dabei vorzugsweise aus einem umlaufenden Endlosband, auf dem die Eiablagen 51 befestigt sind.

In der Umsetzvorrichtung 6 werden die Eier 10 mithilfe von Saughebeelementen 63 von den Eiaufnahmen 51 saugend abgehoben und in die Eierverpackungen 8 eingesetzt, die auf einem unterhalb der Umsetzvorrichtung 6 durchlaufenden Fördereinrichtung in Richtung der Ausgabestation transportiert werden.

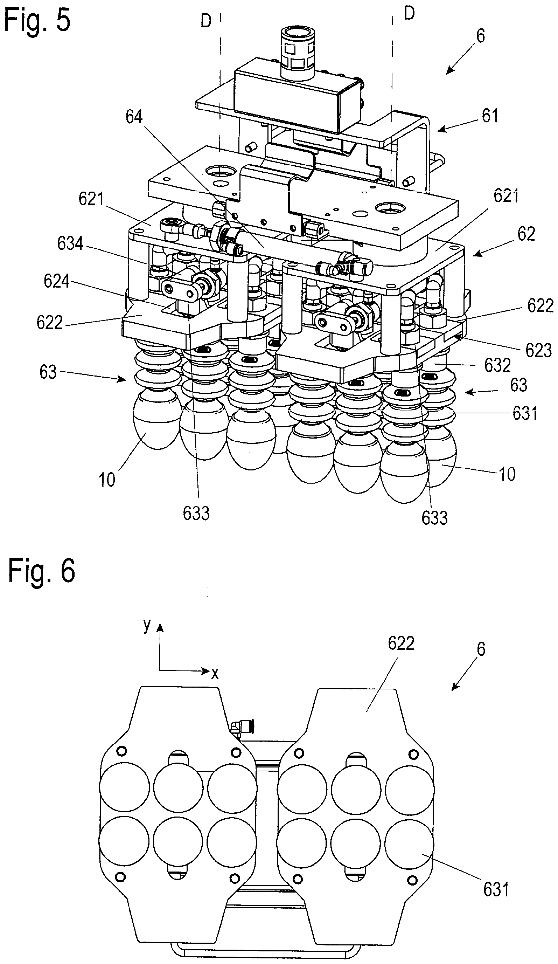

Die Umsetzvorrichtung 6, die zum Schutz bevorzugt mit Gitterwandungen 12 umgeben ist, weist im Wesentlichen ein vertikal bewegbares und horizontal verschiebbares oder verschwenkbares Gestell 61 auf, gezeigt in den Figuren 5 bis 8, mit wenigstens einer Montageplatte 622 eines Montageelements 62, an der mehrere an einer Saugeinrichtung, wie beispielsweise einer Vakuumpumpe, anschließbare Saughebeelemente 63 montiert sind.

Diese Saughebeelemente 63 sind dabei in der Ebene der Montageplatte 622 motorisch oder hydraulisch verschiebbar zwischen einer Ansaugstellung und einer Abgabestellung an der Montageplatte 622 montiert.

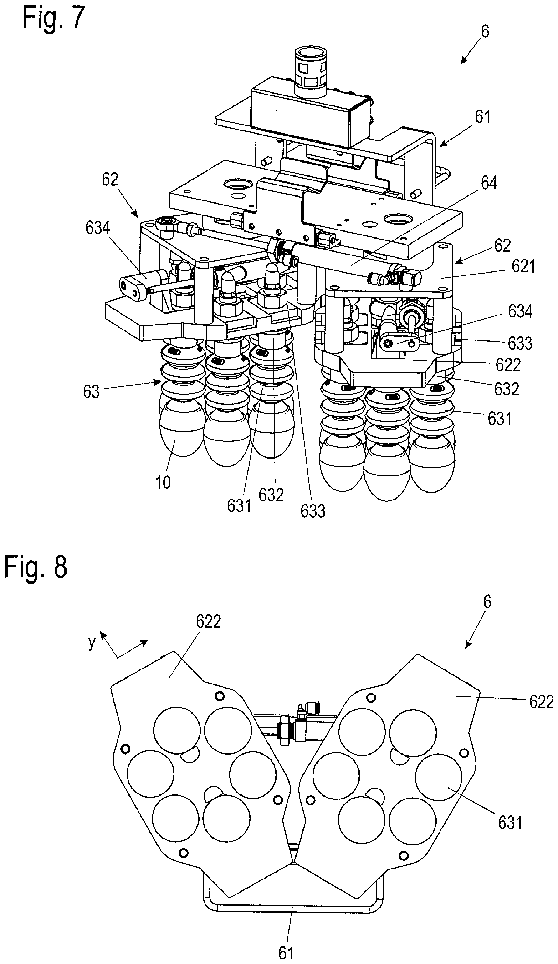

Wie in den Figuren 5 und 7 sowie in der Zusammenschau der Figuren 5 bis 8 dargestellt ist, sind an der Montageplatte 622 bevorzugt sechs Saughebeelemente 63 montiert.

Zwei dieser Saughebeelemente 63 sind dabei linear in einer ersten Verschieberichtung x und die vier anderen der Saughebeelemente 63 in einer zweiten Verschieberichtung y, bevorzugt senkrecht zur Verschieberichtung x, bewegbar.

Dies ermöglicht, die in parallelen Reihen angeordneten Eier 10 auf den Eiaufnahmen 51 des ersten Förderbandes 5 durch Aufsetzen der Saughebeelemente 63 auf die Eier 10 anzusaugen, das Gestell 61 sodann zur Abgabestellung zu verfahren und anschließend durch Abschalten oder Unterbrechen der Ansaugung in die jeweilige Eierverpackung 8 abzusetzen.

Sind die Eierverpackungen 8 als doppelreihige Eierverpackungen ausgebildet, können die Saughebeelemente 63 in der Ansaugstellung verbleiben, da die Eier 10 in diesem Fall, wie in Fig. 6 beispielsweise dargestellt, nach wie vor in zweireihiger Anordnung von den Saughebeelementen 63 gehalten sind.

Sollen die Eier 10 in einer Sternanordnung in sogenannten Sternverpackungen für Eier 10 verpackt werden, werden die Saughebeelemente 63 entsprechend in die in den Figuren 7 und 8 gezeigte Position verfahren, so dass die Eier 10 vor der Bestückung der Eierverpackung 8 in einer der Sternverpackung entsprechenden Sternanordnung angeordnet sind.

Wie in den Figuren 5 bis 8 des Weiteren gezeigt, sind an dem Gestell 61 bevorzugt zwei solcher Montageelemente 62 nebeneinander montiert, wodurch die Kapazität dieser Umsetzvorrichtung 6 erhöht wird.

Jedes der Saughebeelemente 63 weist bevorzugt einen Saugnapf 631 auf, ein in ein oberes Ende des Saugnapfes 631 mündendes Schlauch- oder Rohrstück 632, das über ein Rohr oder einen Schlauch mit der Saugeinrichtung verbunden ist, und ein mit einer Verstellmechanik 634 verbundenes Führungsteil 633. Die Führungsteile 633 sind dabei in Führungsausnehmungen 623, 624 der Montageplatte 622 verschiebbar geführt.

Wie in Fig. 7 des Weiteren gezeigt ist, sind die Montageelemente 62 um eine senkrecht zu den Montageelementen 62 ausgerichtete Drehachse D verschwenkbar. Denkbar ist auch nur eines der Montageelemente 62 um eine solche Drehachse D verschwenkbar am Gestell 61 anzuordnen.

Nachdem die Eier 10 in jeweilige Böden 81 von Eierverpackungen 8 eingesetzt sind, werden die mit Eiern 10 befüllten Eierverpackungen 8 weiter zu einer Verpackungsschließstation 7 gefördert, in der die in Förderrichtung F₃ sich vor den Verpackungsböden 81 angeordneten Verpackungsdeckel 82 durch Umklappen auf die Verpackungsböden 81 verschlossen werden und weiter zu einer Ausgabestation 11 gefördert werden.

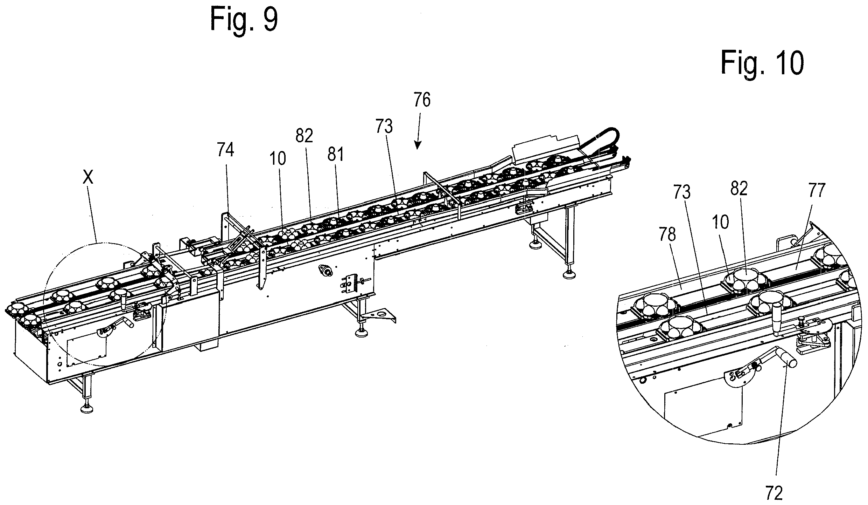

Die Verpackungsschließstation 7 weist zur verbesserten Führung der Eierverpackungen 8 eine aus einem Boden des Förderbandes sich in Förderrichtung F₃ erstreckende anhebbare bzw. absenkbare Führungsleiste 76 auf, die der Führung von Sternverpackungen oder auch von doppelreihigen Sechserverpackungen dient, wie in den Figuren 9 und 10 gezeigt ist.

Diese Sternverpackungen oder doppelreihigen Sechserverpackungen sind nur etwa halb so breit wie ebenfalls in der Vorrichtung zum Transport und Verpacken von Eiern 10 einsetzbaren doppelreihigen Zwölferverpackungen nutzbar.

Die Zwölfer-Eierverpackungen werden bevorzugt ebenfalls quer zur Förderrichtung F₃ auf dem Förderband 75 befördert. Dabei wird die Führungsleiste 76 in den Boden 77 der Verpackungsschließstation 7 eingefahren, so dass diese Eierverpackungen 13 durch randseitige Leisten 78 geführt werden.

Die in der Mitte des Bodens 77 anhebbare bzw. absenkbare Führungsleiste 76 wird dabei in der hier gezeigten Ausführungsvariante mithilfe eines Handhebels 72 angehoben bzw. abgesenkt. Denkbar ist auch eine elektromotorische Ansteuerung dieser Leiste 76.

### Bezugszeichenliste

- 1: Vorrichtung
- 2: Entstapelungsstation

- 3: Eierausrichtungsstation
- 31: Gehäuse
- 32: Laufbahn
- 33: Verstelleinrichtung
- 331: Wendeplatte
- 332: Querstange
- 34: Federelement
- 35: Handhebel
- 36: Rutsche
- 37: Übergabebereich
- 38: Laufrolle
- 39: Leiste

- 4: Entstapelungsstation

- 5: Förderband
- 51: Eiaufnahme
- 52: Bandgehäuse

- 6: Umsetzeinrichtung
- 61: Gestell
- 62: Montageelement
- 621: Deckplatte
- 622: Montageplatte
- 623: Führungsausnehmung
- 624: Führungsausnehmung
- 63: Saughebeelement
- 631: Saugnapf
- 632: Schlauch- oder Rohrstück
- 633: Führungsteil
- 634: Verstellmechanik

- 7: Verpackungsschließstation
- 71: Bandgehäuse
- 72: Handhebel
- 73: Führungsleiste
- 74: Umklappgestänge
- 75: Förderband
- 76: Einsetzbereich
- 77: Boden
- 78: Führungsleiste

- 8: Eierverpackung
- 81: Boden
- 82: Deckel

- 9: Fächerband
- 10: Ei
- 11: Ausgabestation
- 12: Eierverpackung

- x: Verfahrrichtung
- y: Verfahrrichtung

- F₁: Förderrichtung
- F₂: Förderrichtung
- F₃: Förderrichtung

## Patentansprüche

1. Umsetzvorrichtung (6) zur Umsetzung von Eiern (10) von einem Förderband (5) in eine Eierverpackung (8), aufweisend ein Gestell (61) mit wenigstens einer Montageplatte (622) eines Montageelements (62), an der mehrere an eine Saugeinrichtung anschließbare Saughebeelemente (63) montiert sind, wobei die Saughebeelemente (63) in der Ebene der Montageplatte (622) motorisch oder hydraulisch verschiebbar zwischen einer Ansaugstellung und einer Abgabestellung an der Montageplatte (622) montiert sind, **dadurch gekennzeichnet, dass** an dem Gestell (61) zwei Montageelemente (62) nebeneinander montiert sind wobei wenigstens eines der Montageelemente (62) um eine senkrecht zu den Montageelementen (62) ausgerichtete Drehachse (D) verschwenkbar ist.

2. Umsetzvorrichtung nach Anspruch 1, **dadurch gekennzeichnet, dass** an der Montageplatte (622) sechs Saughebeelemente (63) montiert sind, wobei zwei der Saughebeelemente (63) linear in einer ersten Verschieberichtung (x) und die vier anderen der Saughebeelemente (63) in einer zweiten Verschieberichtung (y) bewegbar sind.

3. Umsetzvorrichtung nach Anspruch 2, **dadurch gekennzeichnet, dass** die Saughebeelemente (63) von einer Position, bei der die Saughebeelemente (63) in zwei Reihen parallel zueinander angeordnet sind, in eine einer Sternverpackung für Eier entsprechende Sternanordnung verschiebbar sind.

4. Umsetzvorrichtung nach einem der vorstehenden Ansprüche, **dadurch gekennzeichnet, dass** die Montageplatte (622) Führungsausnehmungen (623, 624) zur Aufnahme von Führungsteilen (635) der Saughebeelemente (63) aufweist, in denen die Führungsteile (635) verschiebbar geführt sind.

5. Umsetzvorrichtung nach einem der vorstehenden Ansprüche, **dadurch gekennzeichnet, dass** jedes der Saughebeelemente (63) einen Saugnapf (631), ein in ein oberes Ende des Saugnapfes (631) mündendes Schlauch- oder Rohrstück (632) und ein mit einer Verstellmechanik (634) verbundenes Führungsteil (633) aufweist.

6. Vorrichtung zum Transport und Verpacken von Eiern (10) in Eierverpackungen (8), aufweisend wenigstens eine Entstapelungsstation (2, 4) für leere Eierverpackungen (8), eine Eierausrichtungsstation (3), eine Umsetzstation (6) zur Umsetzung der Eier (10) von einem Förderband (5) mit mehreren nebeneinander angeordneten Eiaufnahmen (51) in eine Eierverpackung (8), eine Verpackungsschließstation (7) und eine Ausgabestation (11), **dadurch gekennzeichnet, dass** die Umsetzstation (6) eine Umsetzvorrichtung gemäß einem der vorstehenden Ansprüche aufweist.

## Claims

1. Transfer device (6) for transferring eggs (10) from a conveyor belt (5) into an egg pack (8), having a frame (61) with at least one mounting plate (622) of a mounting element (62) on which a plurality of suction lifting elements (63) which can be connected to a suction device are mounted, whereby the suction lifting elements (63) are mounted on the mounting plate (622) in the plane of the mounting plate (622) so as to be displaceable motor-driven or hydraulically between a suction position and a delivery position, **characterized in that** two mounting elements (62) are mounted side by side on the frame (61), whereby at least one of the mounting elements (62) is pivotable about a rotary axis (D) aligned perpendicularly to the mounting elements (62).

2. Transfer device according to claim 1, **characterized in that** six suction lifting elements (63) are mounted on the mounting plate (622), wherein two of the suction lifting elements (63) are movable linearly in a first displacement direction (x) and the other four of the suction lifting elements (63) are movable in a second displacement direction (y).

3. Transfer device according to claim 2, **characterized in that** the suction lifting elements (63) can be displaced from a position in which the suction lifting elements (63) are arranged in two rows parallel to one another into a star arrangement corresponding to a star pack for eggs.

4. Transfer device according to one of the preceding claims, **characterized in that** the mounting plate (622) has guide recesses (623, 624) for accommodating guide parts (635) of the suction lifting elements (63), in which the guide parts (635) are displaceably guided.

5. Transfer device according to one of the preceding claims, **characterized in that** each of the suction lifting elements (63) comprises a suction cup (631), a piece of hose or pipe (632) opening into an upper end of the suction cup (631) and a guide part (633) connected to an adjusting mechanism (634).

6. Device for transporting and packaging eggs (10) in egg packs (8), having at least one destacking station (2, 4) for empty egg packs (8), an egg alignment station (3), a transfer station (6) for transferring the eggs (10) from a conveyor belt (5) with a plurality of egg holders (51) arranged next to one another into an egg pack (8), a pack closing station (7) and an output station (11), **characterized in that** the transfer station (6) has a transfer device in accordance with one of the preceding claims.

## Revendications

1. Dispositif de transfert (6) pour transférer des œufs (10) d'une bande transporteuse (5) dans un emballage d'œufs (8), présentant un bâti (61) avec au moins une plaque de montage (622) d'un élément de montage (62) sur lequel sont montés plusieurs éléments de levage par aspiration (63) pouvant être reliés à un moyen d'aspiration, les éléments de levage par aspiration (63) étant montés sur la plaque de montage (622) de manière à pouvoir être déplacés par un moteur ou hydrauliquement dans le plan de la plaque de montage (622) entre une position d'aspiration et une position de déchargement, **caractérisé en ce que** deux éléments de montage (62) sont montés l'un à côté de l'autre sur le bâti (61), au moins un des éléments de montage (62) pouvant pivoter autour d'un axe de rotation (D) orienté perpendiculairement aux éléments de montage (62).

2. Dispositif de transfert selon la revendication 1, **caractérisé en ce que** six éléments de levage par aspiration (63) sont montés sur la plaque de montage (622), deux des éléments de levage par aspiration (63) étant mobiles linéairement dans une première direction de déplacement (x) et les quatre autres éléments de levage par aspiration (63) étant mobiles dans une deuxième direction de déplacement (y).

3. Dispositif de transfert selon la revendication 2, **caractérisé en ce que** les éléments de levage par aspiration (63) peuvent être déplacés à partir d'une position dans laquelle les éléments de levage par aspiration (63) sont disposés en deux rangées parallèles l'une à l'autre dans une disposition en étoile correspondant à un emballage en étoile pour les œufs.

4. Dispositif de transfert selon l'une des revendications précédentes, **caractérisé en ce que** la plaque de montage (622) présente des évidements de guidage (623, 624) pour recevoir des pièces de guidage (635) des éléments de levage par aspiration (63), dans lesquels les pièces de guidage (635) sont guidées de façon déplaçable.

5. Dispositif de transfert selon l'une des revendications précédentes, **caractérisé en ce que** chacun des éléments de levage par aspiration (63) présente une ventouse (631), un tronçon de tuyau ou de tube (632) débouchant dans une extrémité supérieure de la ventouse (631) et une partie de guidage (633) reliée à un mécanisme de réglage (634).

6. Dispositif pour transporter et emballer des œufs (10) dans des emballages d'œufs (8), présentant au moins un poste de désempilage (2, 4) pour des emballages d'œufs vides (8), un poste d'orientation d'œufs (3), un poste de transfert (6) pour transférer les œufs (10) d'une bande transporteuse (5) comportant plusieurs réceptacles d'œufs (51) disposés les uns à côté des autres dans un emballage d'œufs (8), un poste de fermeture d'emballage (7) et un poste de sortie (11), **caractérisé en ce que** le poste de transfert (6) présente un dispositif de transfert selon l'une des revendications précédentes.
